# DEMANDE DE BREVET EUROPEEN

(11) **EP 4 684 624 A1**
(43) Date de publication de la demande: **28.01.2026**
(21) Numéro de dépôt: 25186642.2
(22) Date de dépôt: 01.07.2025
(51) Int. Cl.: A01C 7/04

(54) **DISPOSITIF DE SÉPARATION POUR UN ORGANE DE DISTRIBUTION ET SEMOIR ASSOCIÉ**

(30) Priorité: 22.07.2024 FR 2408066
(71) Demandeur: Kuhn SAS, 67700 Saverne (FR)
(72) Inventeur: CONSTANT, Olivier, 67340 WEITERSWILLER (FR)

(57) **Abrégé**

L'invention concerne un dispositif de séparation pour un organe de distribution (1) d'éléments granulaires comptant une pluralité de perforations (2) comportant chacune un canal interne avec une entrée et une sortie, comprenant une roue de séparation (6) comportant un axe de rotation (7) et une surface périphérique (8), la roue de séparation (6) comportant une pluralité de saillies radiales (9) saillantes de la surface périphérique (8), lesquelles étant configurées pour s'insérer dans le canal interne d'une des perforations (2) dans une position d'insertion, caractérisé en ce que les saillies radiales (9) sont configurées pour s'insérer par l'entrée du canal interne de l'une des perforations (2) de manière étanche à l'intérieur du canal interne par conjugaison de forme et/ou au moyen d'un élément d'étanchéité (10) dans la position d'insertion de sorte à réaliser l'étanchéité à l'intérieur du canal interne.

## Description

L'invention concerne le domaine des dispositifs de séparation pour un organe de distribution et le domaine des semoirs.

L'invention concerne ainsi plus généralement le domaine du semis monograine qui est aussi appelé semis de précision, c'est-à-dire le semis en rangs de graines une par une. Le semis monograine trouve son application dans les cultures du maïs, de la betterave, du soja ou similaire.

Un semoir monograine se présente généralement sous la forme d'un châssis-poutre sur lequel viennent se fixer des éléments semeurs qui le plus souvent sont compris entre 4 et 12, voire plus, grâce à un parallélogramme. L'espacement entre ces éléments semeurs varie selon les cultures, de préférence entre 37,5 centimètres et 80 centimètres, mais permet de former des rangs bien distincts. Pour cette raison, il est commun dans ce cas de parler de cultures en rangs, par opposition aux cultures comme le blé où l'espacement est beaucoup plus faible.

De manière connue, un dispositif de distribution de semoir monograine fonctionne globalement de la manière énoncée ci-après.

Un boîtier étanche en deux parties comporte un disque de distribution perforé entrainé en rotation de préférence par un moteur qui forme un organe de distribution d'une pluralité d'éléments granulaires. Le disque de distribution sépare le boîtier en deux chambres dans lesquelles les pressions d'air sont différentes, une différence de pression qui peut être positive ou négative est donc créée de part et d'autre du disque de distribution perforé. Le boîtier est relié à une soufflerie qui permet de gérer la différence de pression selon le type de graine, la vitesse d'avance, et d'autres paramètres.

En bas du disque de distribution perforé, c'est-à-dire au fond du boîtier se trouve une zone de réserve d'éléments granulaires, par exemple des graines, qui est le plus souvent approvisionnée par une trémie. Ces graines sont en contact avec le disque de distribution perforé en rotation, qui, au fur et à mesure de sa rotation, va entrainer les graines une par une dans ses perforations.

Le diamètre et la forme des perforations du disque de distribution sont faits de manière à pouvoir accueillir un seul élément granulaire par exemple une graine, le maintien de l'élément granulaire dans la perforation se fait grâce à la différence de pression entre les deux côtés du disque de distribution. Les perforations sont souvent bordées de formes spéciales qui sont par exemple en relief et/ou en creux et sont aménagées dans le disque de distribution de sorte à guider et/ou orienter les graines vers la perforation. Ces zones autour des perforations sont appelées communément agitateurs.

Une fois les graines distribuées dans les perforations du disque de distribution, un système dit de sélection permet d'éliminer les graines qui sont en trop pour éviter les doubles, car il peut arriver que plusieurs graines viennent se loger dans une seule perforation ce qui n'est pas souhaitable. La sélection peut se faire grâce à des dents, des brosses, ou similaires qui sont montées fixes et sont situées à l'extérieur et/ou à l'intérieur du parcours des graines. Il en résulte que les graines excédentaires retombent dans la zone de réserve.

Une fois les graines sélectionnées, elles sont transportées vers la dernière zone de la distribution qui est généralement située dans le dernier quart de tour du disque de distribution, où la différence de pression n'est plus présente. Il résulte de cette absence de différence de pression que la graine sort de la perforation et sort de la distribution vers le sol. L'éjection de la graine peut être assistée par une roulette qui permet de couper la différence de pression et éventuellement de pousser la graine en dehors de la perforation à l'aide de picots, la roulette forme ainsi un dispositif de séparation.

La publication DE102009043881A1 illustre une telle roulette avec une base cylindrique dont le sommet est muni d'un picot entouré d'un joint d'étanchéité plat.

La publication WO 2022/159027A1 illustre une roulette avec des picots et un joint entourant chaque picot.

Dans ces publications, le picot s'insère dans la perforation avec un jeu, tandis que le joint vient en appui contre la paroi du disque au niveau de l'entrée de la perforation sans y pénétrer. Il arrive que la différence de pression ne soit pas interrompue par le picot et la graine ne quittera donc potentiellement pas le disque du fait d'un étanchéité qui n'est pas optimale.

La présente invention a pour but de pallier au moins l'un de ces inconvénients et vise à proposer une solution permettant d'améliorer l'efficacité de la coupure de la différence de pression par une optimisation de l'étanchéité.

A cet effet, l'invention concerne un dispositif de séparation pour un organe de distribution d'une pluralité d'éléments granulaires,

l'organe de distribution étant agencé pour distribuer de façon discrète et singulière une pluralité d'éléments granulaires et comptant une pluralité de perforations comportant chacune un canal interne avec une entrée et une sortie,
le dispositif de séparation comprend au moins :
une roue de séparation comportant un axe de rotation et une surface périphérique,
la roue de séparation comportant une pluralité de saillies radiales saillantes de la surface périphérique, chacune des saillies radiales étant configurées pour s'insérer dans le canal interne d'une des perforations dans une position d'insertion,
le dispositif de séparation est caractérisé en ce que :
les saillies radiales sont configurées pour s'insérer par l'entrée du canal interne de l'une des perforations de manière étanche à l'intérieur du canal interne par conjugaison de forme et/ou au moyen d'un élément d'étanchéité dans la position d'insertion de sorte à réaliser l'étanchéité à l'intérieur du canal interne.

L'invention concerne un ensemble comportant un dispositif de séparation pour un organe de distribution d'une pluralité d'éléments granulaires et un organe de distribution d'une pluralité d'éléments granulaires, l'organe de distribution étant agencé pour distribuer de façon discrète et singulière une pluralité d'éléments granulaires et comptant une pluralité de perforations comportant un canal interne avec une entrée et une sortie, caractérisé en ce que le dispositif de séparation est selon l'invention.

L'invention concerne un semoir comprenant au moins l'ensemble comportant un dispositif de séparation pour un organe de distribution d'une pluralité d'éléments granulaires et un organe de distribution d'une pluralité d'éléments granulaires, caractérisé en ce que l'ensemble est selon l'invention.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue en perspective d'un ensemble comportant un dispositif de séparation et un organe de distribution d'une pluralité d'éléments granulaires d'une première variante de réalisation selon l'invention,
[Fig. 2] la figure 2 représente une vue en coupe d'une saillie radiale du dispositif de séparation dans un canal interne d'une des perforations de l'organe de distribution dans une position d'insertion selon l'invention de l'ensemble de la figure 1,
[Fig. 3] la figure 3 représente une vue en perspective du dispositif de séparation selon l'invention de l'ensemble de la figure 1,
[Fig. 4] la figure 4 représente une vue en coupe d'une saillie radiale du dispositif de séparation selon l'invention de l'ensemble de la figure 1,
[Fig. 5] la figure 5 représente une vue en perspective de l'organe de distribution de l'ensemble de la figure 1,
[Fig. 6] la figure 6 représente une vue en coupe d'une saillie du dispositif de séparation dans un canal interne d'une des perforations de l'organe de distribution dans une position d'insertion d'un ensemble d'une deuxième variante de réalisation selon l'invention,
[Fig. 7] la figure 7 représente une vue en perspective et partielle de l'ensemble de la deuxième variante de réalisation selon l'invention,
[Fig. 8] la figure 8 représente une vue en perspective et partielle de l'ensemble de la deuxième variante de réalisation selon l'invention,
[Fig. 9] la figure 9 représente une vue en perspective de l'organe de distribution de l'ensemble de la figure 6,
[Fig. 10] la figure 10 représente une vue en perspective d'un ensemble comportant un dispositif de séparation et un organe de distribution d'une pluralité d'éléments granulaires d'une troisième variante de réalisation selon l'invention,
[Fig. 11] la figure 11 représente une vue en perspective du dispositif de séparation selon l'invention de l'ensemble de la figure 10,
[Fig. 12] la figure 12 représente une vue en perspective d'un ensemble comportant un dispositif de séparation et un organe de distribution d'une pluralité d'éléments granulaires d'une quatrième variante de réalisation selon l'invention,
[Fig. 13] la figure 13 représente une vue en perspective du dispositif de séparation selon l'invention de l'ensemble de la figure 12, et
[Fig. 14] la figure 14 représente une vue en perspective d'un ensemble de distribution selon l'invention.

L'invention concerne un dispositif de séparation pour un organe de distribution 1 d'une pluralité d'éléments granulaires,
l'organe de distribution 1 étant agencé pour distribuer de façon discrète et singulière une pluralité d'éléments granulaires et comptant une pluralité de perforations 2 comportant chacune un canal interne 3 avec une entrée 4 et une sortie 5,
le dispositif de séparation comprend au moins :
   - une roue de séparation 6 comportant un axe de rotation 7 et une surface périphérique 8,
la roue de séparation 6 comportant une pluralité de saillies radiales 9 saillantes de la surface périphérique 8, chacune des saillies radiales 9 étant configurées pour s'insérer dans le canal interne 3 d'une des perforations 2 dans une position d'insertion P1.

Conformément à l'invention le dispositif de séparation est caractérisé en ce que :
les saillies radiales 9 sont configurées pour s'insérer par l'entrée 4 du canal interne 3 de l'une des perforations 2 de manière étanche à l'intérieur du canal interne 3 par conjugaison de forme et/ou au moyen d'un élément d'étanchéité 10 dans la position d'insertion P1 de sorte à réaliser l'étanchéité à l'intérieur du canal interne 3.

Avantageusement, cette configuration permet d'augmenter la durée d'obturation de la perforation 2, c'est-à-dire le temps pendant lequel la perforation 2 reste obturée par la saillie radiale 9. Il en résulte que la présente invention permet d'améliorer l'efficacité de la coupure de la différence de pression par une optimisation de l'étanchéité. Cette solution présente les autres avantages d'être adaptée à tous les types de graines et de ne pas avoir d'impact sur l'encombrement du dispositif de séparation.

De préférence, chaque saillie radiale 9 présente une forme de cylindre circulaire de profil courbe ou de cône tronqué et est configurée pour s'insérer de manière ajustée dans le canal interne 3 de forme complémentaire en forme de cylindre circulaire de profil courbe ou de cône tronqué par conjugaison de forme dans la position d'insertion P1.

Avantageusement, il en résulte que la saillie radiale 9 présente une forme qui permet de fermer le canal interne 3 sur un secteur plus important dans la position d'insertion P1 que dans l'art antérieur connu. Le profil de la saillie radiale 9 est donc optimisé pour améliorer l'étanchéité.

De préférence, chaque saillie radiale 9 comprend l'élément d'étanchéité 10 configuré pour être inséré à l'intérieur du canal interne 3 de la perforation 2 dans la position d'insertion P1.

Avantageusement, l'élément d'étanchéité 10 permet de réaliser une étanchéité à l'intérieur du canal interne 3 et de rattraper un éventuel jeu de tolérance entre la saillie radiale 9 et le canal interne 3 dans la position d'insertion P1.

Préférentiellement, chaque saillie radiale 9 en forme de cylindre circulaire de profil courbe ou de cône tronqué présente une gorge 11 et l'élément d'étanchéité 10 est un joint torique s'insérant dans la gorge 11.

De préférence, chaque saillie radiale 9 en forme de cylindre circulaire de profil courbe ou de cône tronqué présente un sommet 12 de préférence plan ou bombé duquel un pion de centrage 13 est saillant, le pion de centrage 13 est configuré pour déboucher vers la sortie 5 du canal interne 3 de la perforation 2 dans la position d'insertion P1.

De préférence, la gorge 11 est située sur le profil de chaque saillie radiale 9, entre la surface périphérique 8 et le sommet 12.

Avantageusement, le pion de centrage 13 permet de repousser l'élément granulaire de manière mécanique et d'éviter son coincement au niveau de la sortie 5.

Préférentiellement, la surface périphérique 8 comprend au moins une première rangée R1 de saillies radiales 9 configurées pour s'insérer dans une première rangée circulaire C1 de perforations 2.

Avantageusement, cette possibilité est particulièrement avantageuse pour un organe de distribution 1 présentant un ou plusieurs rangées circulaires C1 de perforations 2.

De préférence, la surface périphérique 8 comprend en outre au moins une rangée RD1 de dents 14 pour s'insérer dans une rangée circulaire CD1 de trous de guidage 15 de préférence borgnes.

Avantageusement, l'au moins une rangée RD1 de dents 4 permet d'assurer la continuité de la rotation de la roue de séparation 6 autour de l'axe de rotation 7. Cette possibilité est particulièrement avantageuse pour un organe de distribution 1 présentant un nombre restreint de perforations 2, c'est-à-dire par exemple moins de trente perforations 2 sur l'organe de distribution 1.

L'invention concerne un ensemble comportant un dispositif de séparation pour un organe de distribution 1 d'une pluralité d'éléments granulaires et un organe de distribution d'une pluralité d'éléments granulaires, l'organe de distribution étant agencé pour distribuer de façon discrète et singulière une pluralité d'éléments granulaires et comptant une pluralité de perforations 2 comportant un canal interne 3 avec une entrée 4 et une sortie 5, caractérisé en ce que le dispositif de séparation est selon l'invention et tel que décrit précédemment.

L'invention concerne un semoir comprenant au moins l'ensemble comportant un dispositif de séparation pour un organe de distribution 1 d'une pluralité d'éléments granulaires et un organe de distribution 2 d'une pluralité d'éléments granulaires, caractérisé en ce que l'ensemble est selon l'invention tel que décrit précédemment.

L'organe de distribution 1 et le dispositif de séparation sont prévus pour faire de préférence partie d'un ensemble de distribution 16 qui comprend en outre un boîtier 17 étanche avec une partie fixe 18 et une partie mobile sous la forme d'une porte 19.

L'organe de distribution 1 comprend de préférence usuellement un disque de distribution perforé par les perforations 2 entrainé en rotation de préférence par un moteur au niveau d'un axe d'entraînement 20.

Le disque de distribution sépare le boîtier 17 en deux chambres, la première chambre et la deuxième chambre, dans lesquelles les pressions d'air sont de préférence différentes. La première chambre et la deuxième chambre ont préférentiellement une forme sensiblement cylindrique. La porte 19 reçoit de préférence le disque de distribution, mais cet exemple n'est pas limitatif. la première chambre permet de recevoir tout ou partie de la pluralité d'éléments granulaires et la deuxième chambre est fermée par la porte 19 au moins dans sa position de fermeture.

Les perforations 2 sont de préférence distribuées circulairement selon une ou plusieurs rangées circulaires C1, C2 et sont espacées les unes des autres. Les perforations 2 sont traversantes.

De préférence, la première rangée circulaire C1 comprend soixante perforations 2.

De préférence, la deuxième rangée circulaire C2 comprend soixante perforations 2.

Le canal interne 3 permet de créer une communication entre la première chambre et la deuxième chambre.

L'entrée 4 permet l'insertion de la saillie radiale 9 et est destinée à déboucher dans la deuxième chambre.

La sortie 5 est configurée pour être en contact d'un élément granulaire et est destinée à déboucher dans la première chambre.

L'entrée 4 présente de préférence un diamètre supérieur au diamètre de l'entrée 5.

L'entrée 5 peut également comprendre une lèvre radiale 22 permettant de rétrécir encore davantage le diamètre de la sortie 5. Le diamètre ainsi rétréci permet toutefois l'insertion du pion de centrage 13 dans la position d'insertion P1.

Préférentiellement, la lèvre radiale 22 est en contact du sommet 12 au moins partiellement dans la position d'insertion P1.

La roue de séparation 6 est de préférence montée en rotation autour de l'axe de rotation 7 sur un support 21 qui est fixé à l'axe d'entraînement 20.

L'axe de rotation 7 et l'axe d'entrainement 20 sont de préférence sécants.

La roue de séparation 6 présente de préférence un diamètre inférieur au diamètre du disque de distribution.

La surface périphérique 8 présente une largeur sensiblement identique à la largeur de l'au moins une rangée circulaire C1, C2.

Chaque saillie radiale 9 présente de préférence un axe de révolution qui prolonge une direction radiale de la roue de séparation 6.

Les saillies radiales 9 sont de préférence distribuées selon au moins une rangée R1 sur la surface périphérique 8.

Les saillies radiales 9 sont de préférence distribuées selon une première rangée R1 et une deuxième rangée adjacente R2 sur la surface périphérique 8.

Dans ce cas, préférentiellement les saillies radiales 9 de la première rangée R1 et de la deuxième rangée R2 ne sont pas alignées côte à côte mais sont décalées.

Chaque saillie radiale 9 présente une hauteur de préférence comprise entre 5 millimètres et 40 millimètres.

Chaque saillie radiale 9 présente une forme complémentaire à celle du canal interne 3 de sorte que dans la position d'insertion la saillie radiale 9 et le canal interne 3 sont emboîtés avec ou sans jeu de tolérance. Si un jeu de tolérance est présent, l'élément d'étanchéité 10 permet de le compenser.

La roue de séparation 6 présente de préférence neuf saillies radiales 9.

L'élément d'étanchéité 10 est de préférence dans un matériau de type élastomère et présente un diamètre extérieur compris entre 7 millimètres et 15 millimètres, et une épaisseur comprise entre 2 millimètres et 6 millimètres.

L'élément d'étanchéité 10 peut être par exemple un joint torique.

La gorge 11 présente de préférence une profondeur et une hauteur comprises entre 2 millimètres et 5 millimètres.

Le pion de centrage 13 présente de préférence la forme d'un picot ou d'un plot.

Le pion de centrage 13 présente de préférence un diamètre extérieur compris entre 2 millimètres et 10 millimètres, et une hauteur comprise entre 1 millimètre et 5 millimètres.

Les dents 14 sont de préférence distribuées selon une rangée RD1 accolée à la première rangée R1 de saillies radiales 9.

Préférentiellement, les saillies radiales 9 de la première rangée R1 et les dents 14 de la rangée RD1 ne sont pas alignées côte à côte mais sont décalées.

La roue de séparation 6 présente de préférence six dents 14.

Chaque dent 14 présente par exemple une forme de parallélépipède.

Les trous de guidage 15 sont de préférence distribués circulairement selon une rangée circulaire CD1.

De préférence, la rangée circulaire CD1 comprend vingt et un trous de guidage 15.

Les trous de guidage 15 sont de préférence traversants ou borgnes.

Chaque dent 14 présente une forme complémentaire à chaque trou de guidage 15 pour permettre l'insertion des dents 14 dans les trous de guidage 15.

La lèvre radiale 22 s'étend radialement dans le diamètre de la sortie 5 sur un longueur l et présente une épaisseur e.

La lèvre radiale 22 peut de préférence présenter un bord libre 23 biseauté et/ou arrondi et/ou plat.

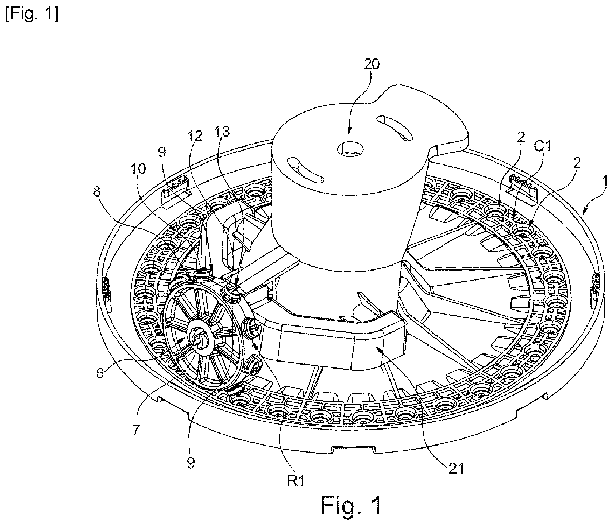

Les figures 1 à 5 illustrent une première variante de réalisation de l'ensemble selon l'invention.

La figure 1 illustre l'ensemble selon l'invention dans la première variante de réalisation avec le dispositif de séparation qui comprend la roue de séparation 6 et l'organe de distribution 1 se présentant sous la forme d'un disque de distribution. Dans cet exemple, la roue de séparation 6 est montée en rotation par l'axe de rotation 7 sur le support 21, ce dernier étant fixé à l'axe d'entraînement 20. La surface périphérique 8 de la roue de séparation 6 comprend une seule première rangée R1 de saillies radiales 9. Chaque saillie radiale 9 présente la forme d'un cône tronqué et comprend un élément d'étanchéité 10 sous la forme d'un joint torique. Un pion de centrage 13 est saillant du sommet 12 du cône tronqué. Le pion de centrage 13 est aligné avec l'axe de révolution du cône tronqué. L'organe de distribution 1 sous la forme du disque de distribution présente une seule première rangée circulaire C1 de perforations 2.

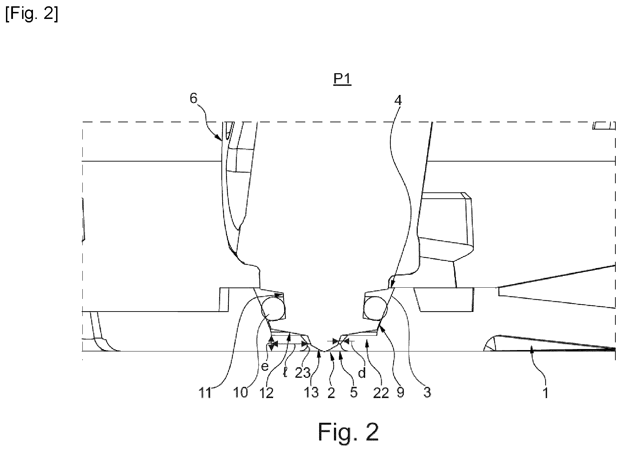

La figure 2 illustre en détail l'insertion d'une saillie radiale 9 de la roue de séparation dans le canal interne 3 d'une perforation 2 de l'organe de distribution 1, cette position correspondant à la position d'insertion P1. Cette figure illustre plus particulièrement que l'élément d'étanchéité 10 sous la forme d'un joint torique est inséré dans la gorge 10. En outre, le sommet 12 présente une forme bombée et comprend le pion de centrage 13. Le canal interne 3 présente une forme évasée de cône tronqué. L'entrée 4 présente un diamètre supérieur au diamètre de la sortie 5 qui est munie de la lèvre radiale 22. Cette lèvre radiale 22 est en regard voir en contact avec la surface bombée du sommet 12. En outre, la lèvre radiale 22 entoure le pion de centrage 13 situé au niveau de la sortie 5. La distance d entre la lève radiale 22 et le pion de centrage 13 est de préférence comprise entre 0 et 1,5 millimètres. Dans cette position d'insertion P1, la saillie radiale 9 est emboîtée dans le canal interne 3 par l'entrée 4 avec un jeu de tolérance qui est rattrapé par le joint d'étanchéité 10 qui est disposé à l'intérieur du canal interne 3 et vient au contact du canal interne 3 pour réaliser l'étanchéité.

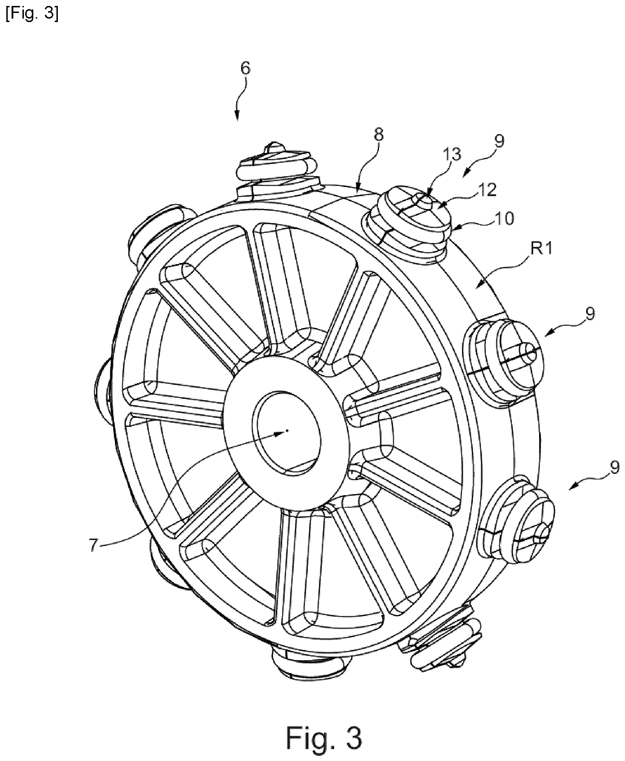

La figure 3 illustre la roue de séparation 6 du dispositif de séparation rotative autour de son axe de rotation 7. La surface périphérique 8 de la roue de séparation 6 comprend une seule première rangée R1 de saillies radiales 9. Chaque saillie radiale 9 présente la forme d'un cône tronqué et comprend un élément d'étanchéité 10 sous la forme d'un joint torique. Un pion de centrage 13 est saillant du sommet 12 du cône tronqué. Le pion de centrage 13 est aligné avec l'axe de révolution du cône tronqué.

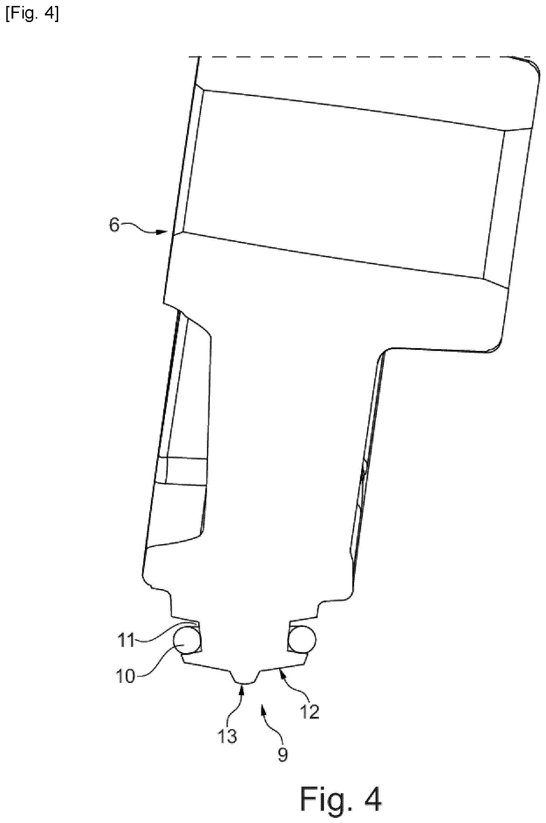

La figure 4 illustre une saillie radiale 9 de la roue de séparation 6 qui présente la forme d'un cône tronqué et comprend un élément d'étanchéité 10 sous la forme d'un joint torique inséré dans la gorge 11. Le pion de centrage 13 est saillant du sommet 12 du cône tronqué dont la surface est bombée. Le pion de centrage 13 est aligné avec l'axe de révolution du cône tronqué.

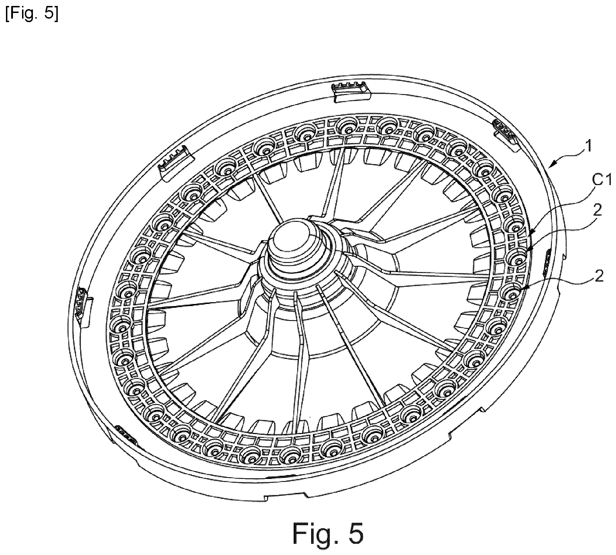

La figure 5 illustre l'organe de distribution 1 sous la forme du disque de distribution et présentant une seule première rangée circulaire C1 de perforations 2.

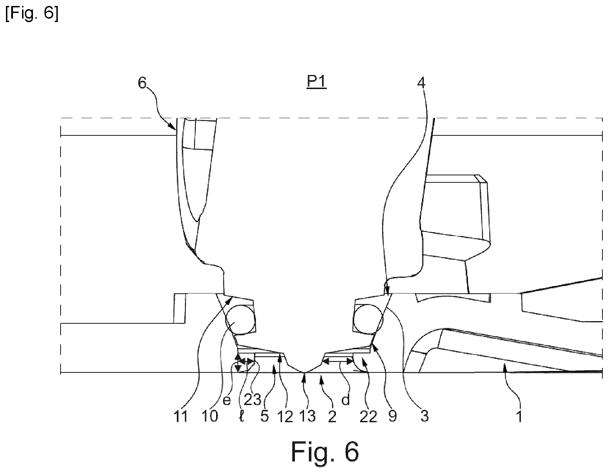

Les figures 6 à 9 illustrent une deuxième variante de réalisation de l'ensemble selon l'invention. Dans cette variante, la roue de séparation 6 est identique à celle de la première variante de réalisation, seul l'organe de distribution 1 diffère notamment au niveau de la forme des perforations 2.

La figure 6 illustre en détail l'insertion d'une saillie radiale 9 de la roue de séparation dans le canal interne 3 d'une perforation 2 de l'organe de distribution 1, cette position correspondant à la position d'insertion P1. Comme dans la figure 2, l'élément d'étanchéité 10 sous la forme d'un joint torique est inséré dans la gorge 10 et le sommet 12 présente une forme bombée et comprend le pion de centrage 13. Le canal interne 3 présente une forme évasée de cône tronqué. L'entrée 4 présente un diamètre supérieur au diamètre de la sortie 5 qui est munie de la lèvre radiale 22. Cette lèvre radiale 22 est en regard mais n'est pas en contact avec la surface bombée du sommet 12. En outre, la lèvre radiale 22 qui entoure le pion de centrage 13 s'étend moins dans la direction radiale que dans l'exemple de la première variante de réalisation illustré notamment par la figure 2. En effet, la lèvre radiale 22 présente un longueur l inférieure à celle de la lèvre radiale 22 de la figure 2. La distance d entre la lèvre radiale 22 et le pion de centrage 13 est de préférence comprise entre 1 millimètre et 5 millimètres. Dans cette position d'insertion P1, la saillie radiale 9 est emboîtée dans le canal interne 3 par l'entrée 4 avec un jeu de tolérance qui est rattrapé par le joint d'étanchéité 10 qui est disposé à l'intérieur du canal interne 3 et vient au contact du canal interne 3 pour réaliser l'étanchéité.

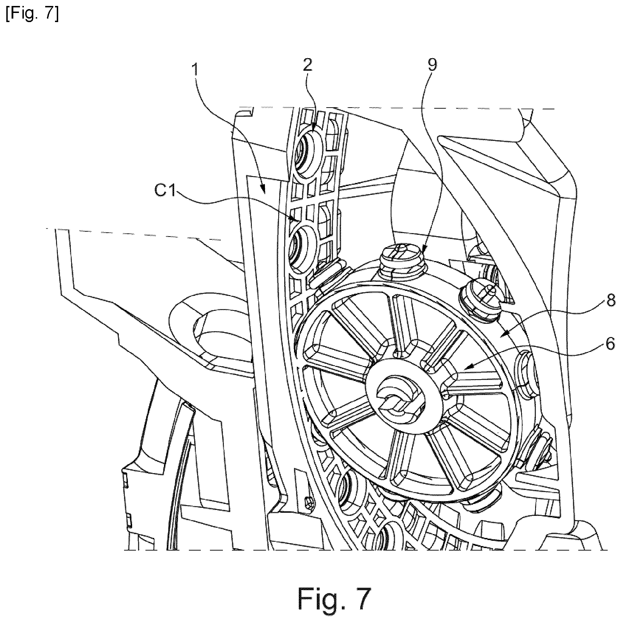

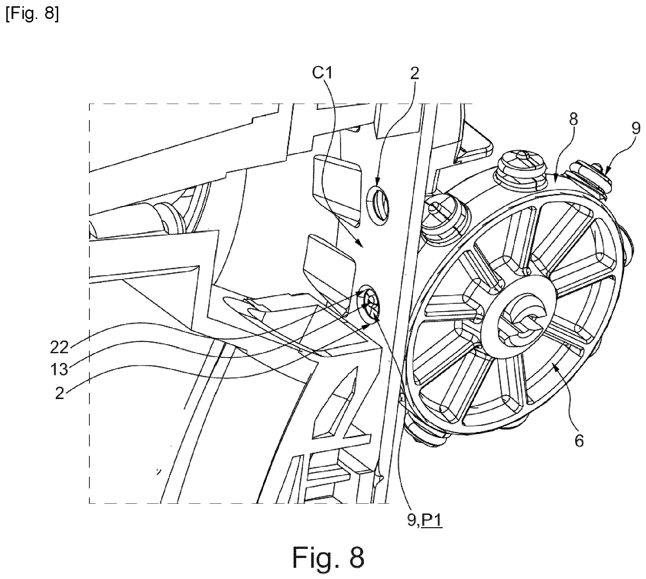

Les figures 7 et 8 illustrent partiellement l'ensemble selon l'invention dans la deuxième variante de réalisation avec le dispositif de séparation qui comprend la roue de séparation 6 identique à celle de la première variante de réalisation et l'organe de distribution 1 se présentant sous la forme d'un disque de distribution qui est lui différent comme détaillé dans la figure 6. Chaque saillie radiale 9 présente la forme d'un cône tronqué. L'organe de distribution 1 sous la forme du disque de distribution présente une seule première rangée circulaire C1 de perforations 2.

Comme le montre la figure 8, dans la position d'insertion P1, le pion de centrage 13 est à l'intérieur de la perforation 2 et la lèvre radiale 22 est autour du pion de centrage 13 mais à distance de ce dernier.

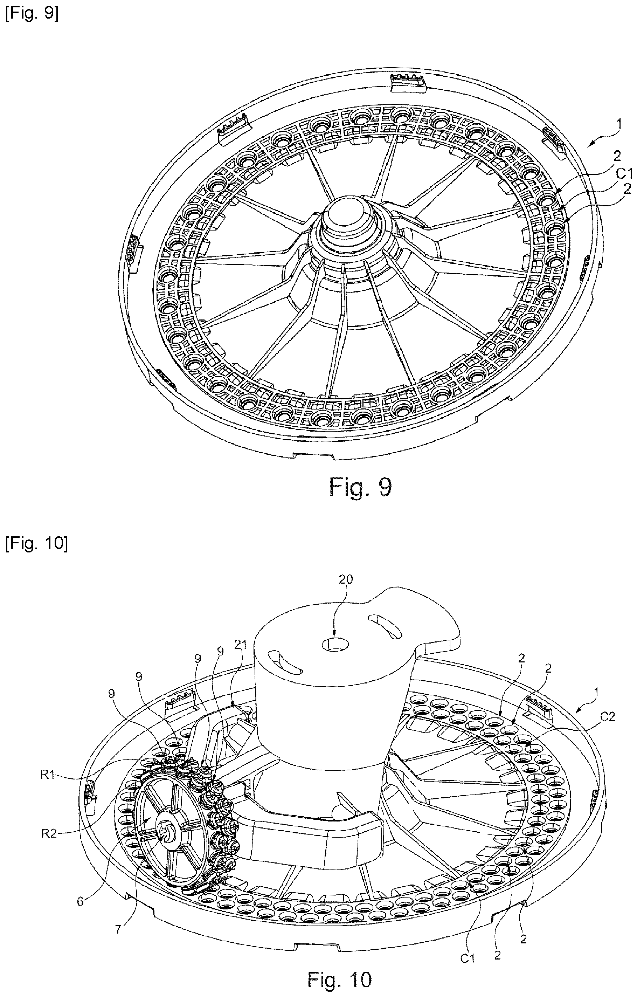

La figure 9 illustre l'organe de distribution 1 sous la forme du disque de distribution et présentant une seule première rangée circulaire C1 de perforations 2.

Les figures 10 à 11 illustrent une troisième variante de réalisation de l'ensemble selon l'invention.

La figure 10 illustre l'ensemble selon l'invention dans la troisième variante de réalisation avec le dispositif de séparation qui comprend la roue de séparation 6 et l'organe de distribution 1 se présentant sous la forme d'un disque de distribution. Dans cet exemple la roue de séparation 6 est montée en rotation par l'axe de rotation 7 sur le support 21, ce dernier étant fixé à l'axe d'entraînement 20. La surface périphérique 8 de la roue de séparation 6 comprend une première rangée R1 de saillies radiales 9 et une deuxième rangée R2 de saillies radiales 9. Chaque saillie radiale 9 présente des caractéristiques identiques à celles des première et deuxième variantes décrites précédemment. L'organe de distribution 1 sous la forme du disque de distribution présente une première rangée circulaire C1 de perforations 2 et une deuxième rangée circulaire C2 de perforations 2.

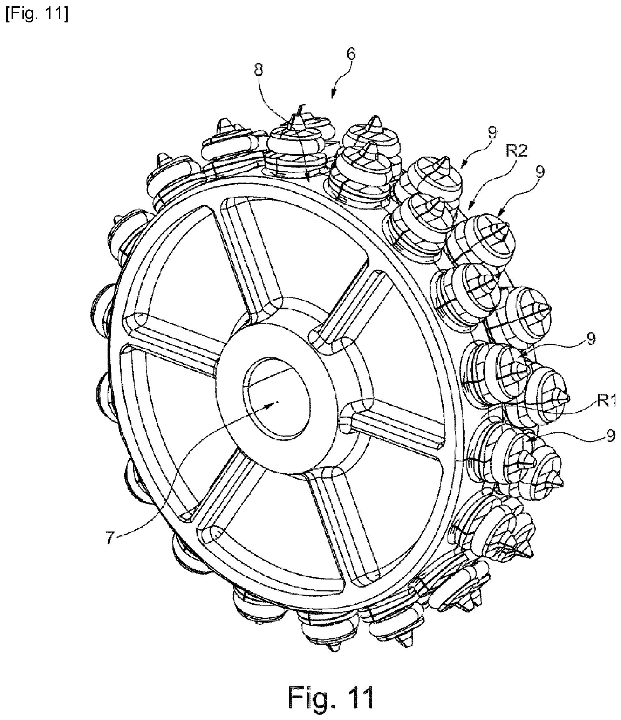

La figure 11 illustre la roue de séparation 6 du dispositif de séparation rotative autour de son axe de rotation 7. La surface périphérique 8 de la roue de séparation 6 comprend une première rangée R1 de saillies radiales 9 et une deuxième rangée R2 de saillies radiales 9. Chaque saillie radiale 9 présente des caractéristiques identiques à celles des première et deuxième variantes décrites précédemment. Les saillies radiales 9 de la première rangée R1 et de la deuxième rangée R2 ne sont pas alignées côte à côte mais sont décalées.

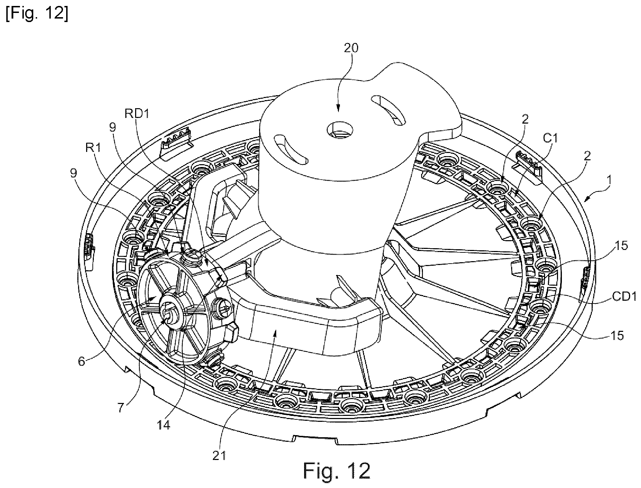

Les figures 12 à 13 illustrent une quatrième variante de réalisation de l'ensemble selon l'invention.

La figure 12 illustre l'ensemble selon l'invention dans la quatrième variante de réalisation avec le dispositif de séparation qui comprend la roue de séparation 6 et l'organe de distribution 1 se présentant sous la forme d'un disque de distribution. Dans cet exemple la roue de séparation 6 est montée en rotation par l'axe de rotation 7 sur le support 21, ce dernier étant fixé à l'axe d'entraînement 20. La surface périphérique 8 de la roue de séparation 6 comprend une seule première rangée R1 de saillies radiales 9 et une rangée RD1 de dents 14. Chaque saillie radiale 9 présente des caractéristiques identiques à celles des première, deuxième, troisième variantes décrites précédemment. L'organe de distribution 1 sous la forme du disque de distribution présente une première rangée circulaire C1 de perforations 2 et une rangée circulaire CD de trous de guidage 15. Les perforations 2 présentent des caractéristiques identiques à celles de la première variante de réalisation. Les trous de guidage 15 sont borgnes. La première rangée circulaire C1 est située davantage à proximité du bord que la rangée circulaire CD de trous de guidage 15.

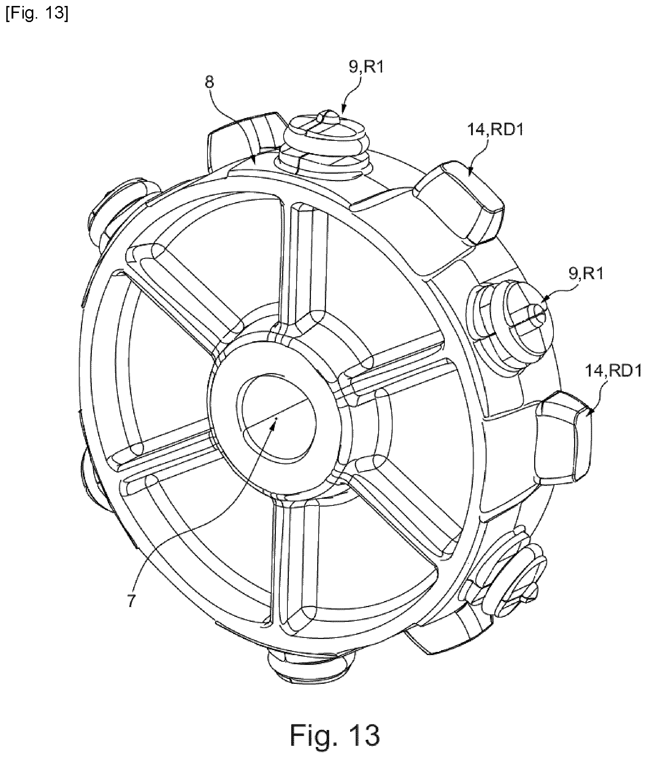

La figure 13 illustre la roue de séparation 6 du dispositif de séparation rotative autour de son axe de rotation 7. La surface périphérique 8 de la roue de séparation 6 comprend une seule première rangée R1 de saillies radiales 9 et une rangée RD1 de dents 14. Chaque saillie radiale 9 présente des caractéristiques identiques à celles des première et deuxième variantes décrites précédemment. Les saillies radiales 9 de la première rangée R1 et les dents 14 de la rangée RD1 ne sont pas alignées côte à côte mais sont décalées.

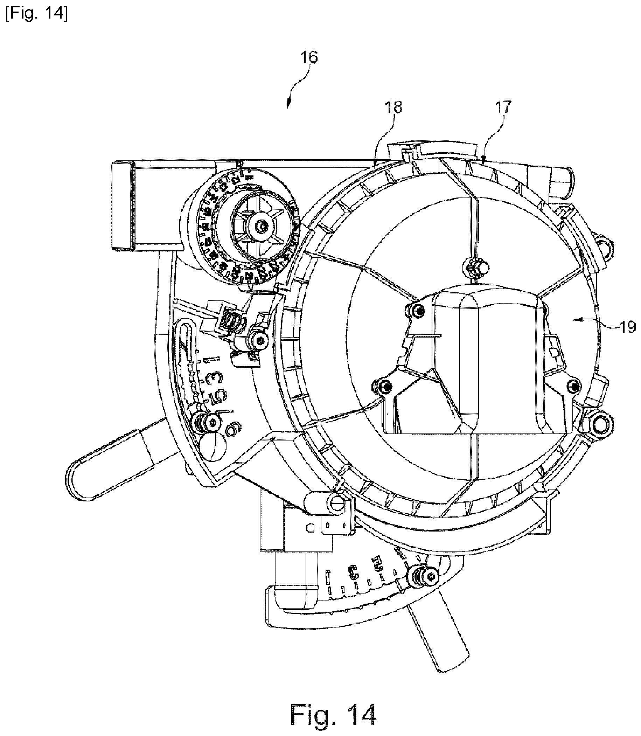

La figure 14 illustre un ensemble de distribution 16 qui comprend un boîtier 17 étanche avec la partie fixe 18 et la porte 19. L'organe de distribution 1 et le dispositif de séparation qui ne sont pas visibles sont situés à l'intérieur du boîtier 17.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de séparation pour un organe de distribution (1) d'une pluralité d'éléments granulaires,
l'organe de distribution (1) étant agencé pour distribuer de façon discrète et singulière une pluralité d'éléments granulaires et comptant une pluralité de perforations (2) comportant chacune un canal interne (3) avec une entrée (4) et une sortie (5),
le dispositif de séparation comprend au moins :
- une roue de séparation (6) comportant un axe de rotation (7) et une surface périphérique (8),
la roue de séparation (6) comportant une pluralité de saillies radiales (9) saillantes de la surface périphérique (8), chacune des saillies radiales (9) étant configurées pour s'insérer dans le canal interne (3) d'une des perforations (2) dans une position d'insertion (P1),
le dispositif de séparation est **caractérisé en ce que** :
- les saillies radiales (9) sont configurées pour s'insérer par l'entrée (4) du canal interne (3) de l'une des perforations (2) de manière étanche à l'intérieur du canal interne (3) par conjugaison de forme et/ou au moyen d'un élément d'étanchéité (10) dans la position d'insertion (P1) de sorte à réaliser l'étanchéité à l'intérieur du canal interne (3).

2. Dispositif de séparation selon la revendication 1, **caractérisé en ce que** chaque saillie radiale (9) présente une forme de cylindre circulaire de profil courbe ou de cône tronqué et est configurée pour s'insérer de manière ajustée dans le canal interne (3) de forme complémentaire en forme de cylindre circulaire de profil courbe ou de cône tronqué par conjugaison de forme dans la position d'insertion (P1).

3. Dispositif de séparation selon l'une quelconque des revendication 1 à 2, **caractérisé en ce que** chaque saillie radiale (9) comprend l'élément d'étanchéité (10) configuré pour être inséré à l'intérieur du canal interne (3) de la perforation (2) dans la position d'insertion (P1).

4. Dispositif de séparation selon les revendications 2 et 3, **caractérisé en ce que** chaque saillie radiale (9) en forme de cylindre circulaire de profil courbe ou de cône tronqué présente une gorge (11) et **en ce que** l'élément d'étanchéité (10) est un joint torique s'insérant dans la gorge (11).

5. Dispositif de séparation selon l'une quelconque des revendications 2 à 4, **caractérisé en ce que** chaque saillie radiale (9) en forme de cylindre circulaire de profil courbe ou de cône tronqué présente un sommet (12) de préférence plan ou bombé duquel un pion de centrage (13) est saillant, le pion de centrage (13) est configuré pour déboucher vers la sortie (5) du canal interne (3) de la perforation (2) dans la position d'insertion (P1).

6. Dispositif de séparation selon l'une quelconque des revendications 1 à 5, **caractérisé en ce que** la surface périphérique (8) comprend au moins une première rangée (R1) de saillies radiales (9) configurées pour s'insérer dans une première rangée circulaire (C1) de perforations (2).

7. Dispositif de séparation selon la revendication 6, **caractérisé en ce que** la surface périphérique (8) comprend en outre au moins une rangée (RD1) de dents (14) pour s'insérer dans une rangée circulaire (CD1) de trous de guidage (15) de préférence borgnes.

8. Ensemble comportant un dispositif de séparation pour un organe de distribution (1) d'une pluralité d'éléments granulaires et un organe de distribution d'une pluralité d'éléments granulaires, l'organe de distribution étant agencé pour distribuer de façon discrète et singulière une pluralité d'éléments granulaires et comptant une pluralité de perforations (2) comportant un canal interne (3) avec une entrée (4) et une sortie (5), **caractérisé en ce que** le dispositif de séparation est selon l'une quelconque des revendications 1 à 7.

9. Semoir comprenant au moins l'ensemble comportant un dispositif de séparation pour un organe de distribution (1) d'une pluralité d'éléments granulaires et un organe de distribution (2) d'une pluralité d'éléments granulaires, **caractérisé en ce que** l'ensemble est selon la revendication 8.
